# EUROPEAN PATENT APPLICATION

(11) **EP 1 416 677 A1**
(43) Date of publication of application: **06.05.2004**
(21) Application number: 03255555.9
(22) Date of filing: 05.09.2003
(51) Int. Cl.: H04L 12/28

(54) **Mapping and discovering peer-to-peer wireless networks**

(30) Priority: 29.10.2002 US 282729
(71) Applicant: Agilent Technologies, Inc., Palo Alto, CA 94306 (US)
(72) Inventor: Karlquist, Richard K., Cupertino, California 95014 (US); Johnson, Matthew, Half Moon Bay, California 94019 (US); Nishimura, Ken A., Fremont, California 94555-2964 (US); Higgins, Michael C., Palo Alto, California 94301 (US); Liu, Jerry J., Sunnyvale, California 94086-8650 (US); Martin, Robert T., Cupertino, California 95014-2825 (US)
(74) Representative: Exell, Jonathan Mark

(57) **Abstract**

Discovery and mapping of network nodes in a peer-to-peer network. Network nodes in a peer-to-peer network are discovered and mapped by sending out queries at varying power levels and recording acknowledgments including a quality-of-service metric from the acknowledging node.

## Description

The present invention pertains to wireless networks consisting of peer nodes such as those used with handheld wireless digital devices, and to methods of mapping and discovery of such networks.

Wireless networks commonly used in services such as telephony have fixed control or base stations which service a community of portable slave devices. In the wireless telephone industry fixed master stations are situated based on a number of criteria, such as topography, user density, political and aesthetic concerns to name a few. Such master stations have ranges and coverage areas measured in miles. In these environments, network topology is understood and planned out.

In contrast are networks consisting of peer-to-peer nodes using short-range technologies such as the recognized Bluetooth or 802.11 (802.11a, 802.11b, and emerging 802.11g) wireless technologies, IRDA or similar optical technologies, or newer UWB technologies, where networks may be formed on an ad-hoc basis. Consider for example a community of users with wireless enabled devices gathering together in a conference room. Because of the ad-hoc nature of the network so formed, there is no a priori knowledge of the required transmit power to establish and maintain communications between the nodes.

According to one aspect of the present invention, there is provided a method according to claim 1.

According to another aspect of the present invention, there is provided a method according to claim 14.

An ad-hoc network of peer-to-peer nodes is mapped by broadcasting queries at different power levels and recording a received quality of service metric. The method may include the step of calculating a transmit power level to use in communicating with an acknowledging node based on the quality of service metric returned by the acknowledging node. One method sends queries at successively higher power levels to discovers nodes. The search can be terminated when a sufficient number of nodes are discovered, particular node classes are discovered, or a particular power level is reached. A second method starts the search transmitting queries at a high power level and reducing the power level, recording replying nodes. Quality of service metrics include received signal strength, and bit error rate.

The present invention is described with respect to particular exemplary embodiments thereof and reference is made to the drawings in which:
Fig. 1 is a block diagram of a node,
Fig. 2 shows an ad-hoc network,
Fig. 3 shows a flow chart of the discovery and mapping process, and
Fig. 4 shows a flow chart of a second embodiment of the discovery and mapping process..

In self-configuring networks consisting of peer-to-peer nodes and without control nodes, the first step in the configuration of a particular node is the discovery of what other nodes are capable of communicating with the node being configured. While the present invention is described in terms of radio-frequency (RF) networking such as 802.11, Bluetooth, or UWB technologies, it is also applicable to variations on those technologies and to optical schemes such as IRDA, a system using infra-red light.

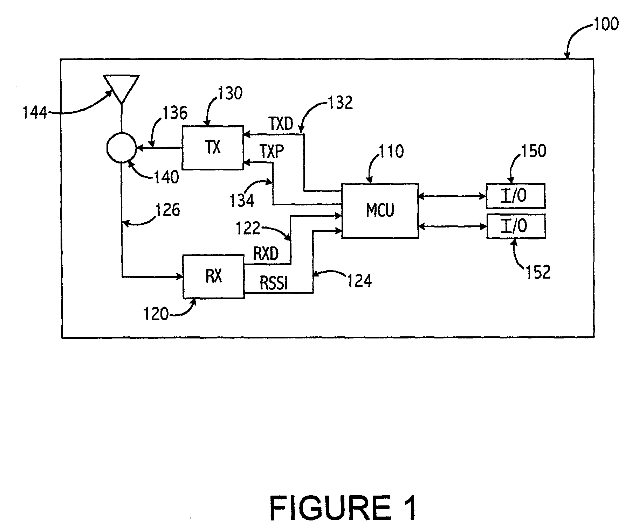

A typical node is shown in simplified block diagram form in Fig. **1.** Node **100** is controlled by microcontroller (MCU) **110.** Receiver **120** sends receive data (RXD) **122** to MCU **110** along with receive signal strength indication (RSSI) signal **124.** RSSI signal **124** is commonly derived from the automatic gain control (AGC) signal in the receiver. MCU **110** sends transmit data (TXD) **132** to transmitter **130,** setting the transmit power level using transmit power (TXP) signal **134.** MCU **110** also communicates with input/output (IO) devices **150** and **152** representing keypads, displays, audio input/output, and the like. In an RF node, for example using Bluetooth or an 802.11 technology, antenna **144** is coupled **140** to the transmitter output **136** and receiver input **126**. Depending on the particular technology, coupler **140** may be a duplexer, circulator, t/r switch, or other similar device known to the RF arts. In optical systems, transmitter output **136** drives light emitting diodes, and receiver input **126** is fed by photodiodes.

For the purposes of the invention, the transmit and receive technologies are not important, as long as the receiver provides receive data **122** and received signal strength indication **124**, and the transmitter accepts transmit data **132** and transmit power level **134**.

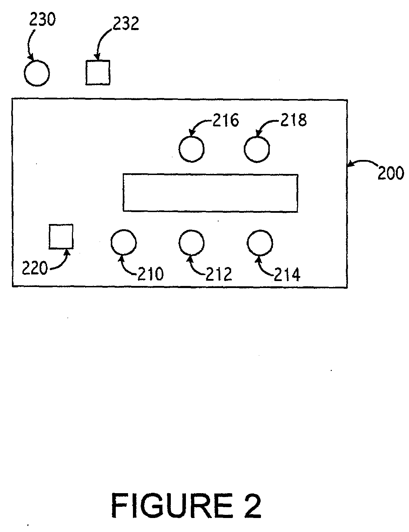

An example of an ad-hoc network is a group of users gathering together in a conference room and activating wireless-enabled devices. Such an ad-hoc network is shown in Fig. **2**. Imagine conference room **200,** with wireless nodes **210, 212, 214, 216, 218.** Also present is wireless-enabled printer **220.**

Because the network is ad-hoc, there is no *a priori* knowledge of other nodes in the vicinity, or of the transmit power level which must be used by node **210,** for example, to maintain communications with other nodes forming an ad-hoc network. The goal of devices operating in such networks is to exchange digital data. Quality-of service (QoS) metrics are often used to measure the effectiveness of devices under different operating conditions. Preferred QoS metrics yield bit error rates, or estimate the energy per desired bit vs. energy over the band (E_{b}/N₀). In an ideal channel with additive white Gaussian noise (AWGN), the Received Signal Strength Indicator (RSSI) signal, usually derived from the AGC signal in the receiver, is a good proxy for QoS. However, in the presence of other types of interference, such as multipath or co-channel interference, RSSI is a poor proxy. In a channel where the main source of interference is AWGN, raising transmit power overcomes the interference. The same may be true for co-channel interference. A channel suffering from multipath distortion, however, is relatively insensitive to transmit power levels -- raising the power used will not improve QoS. Systems based on CDMA derive bit error rate metrics such as E_{b}/N₀, useful for measuring QoS. Another metric which may be used for QoS is the signal to noise ratio.

The desire in such systems is to use the minimum power required to maintain a specified QoS. Minimizing transmit power is important not only in conserving battery life, but also in maximizing spectrum utilization by minimizing interference to other services and devices.

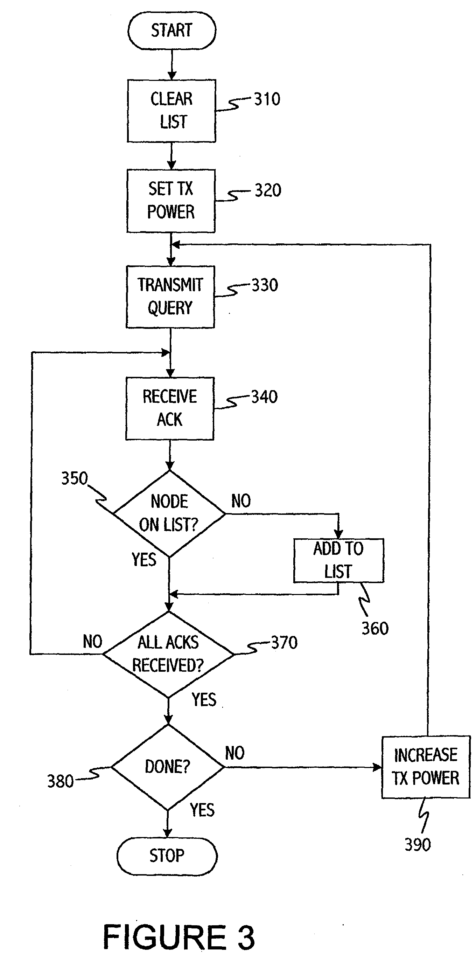

According to the first embodiment of the present invention, referring to Figs. 1 and **2,** node **210** discovers and maps its network environment. This process is shown in Fig. **3** and starts by clearing a list of discovered nodes **310,** then selecting the transmit power at a first low level **320.** The querying node then sends out a query transmission **330** at the selected power level. It listens for acknowledgements of the query **340.** Each node receiving a query responds with an acknowledgement which includes the QoS at the acknowledging node. For each acknowledgment received, the querying node checks **350** the discovered node list to see if the node is already on the list. If the node is already on the list, nothing is done with that acknowledgement. If the node is not on the discovered node list, it is added **360** to the list, recording information on the acknowledging node such as the QoS at the acknowledging node, the transmit power used by the querying node, and other information about the acknowledging node. It may be beneficial to record the class of the acknowledging node, information consisting of the capabilities of the acknowledging node, such as providing services such as printing, network gateway, file access, e-mail, time, or the like. The node may receive acknowledgements from multiple nodes. The determination that no more acknowledgements are forthcoming is usually made by determining that no acknowledgement messages have been received over a preset amount of time. When no more acknowledgments are received **370**, a check is made **380** to determine if the process is completed. If it is not completed, the node increases its transmit power level **390** and repeats the process **330,** noting acknowledgements from nodes not already discovered. In this manner, progressively more remote nodes in terms of transmit power required to communicate with them are discovered and mapped.

As an example using Fig. **2,** node **210** sends out a query and receives acknowledgements from printer **220,** node **212,** and node **216.** Printer **220** and nodes **212** and **216** are added to the list. Transmit power is increased, another query sent out, and acknowledgements are received from printer **220**; node **212**, node **216**, and node **214.** Node **214** is added to the list. Transmit power is increased again, another query sent, and acknowledgements are received from printer **220,** node **212,** node **216,** node **214,** and node **218.** Node **218** is added to the list. In an optical networking environment, signals from nodes **210, 212, 214, 216, 218,** and **220** would be enclosed by conference room **200.** In an RF networking environment, walls may be relatively transparent to RF energy, so that queries from node **210** at sufficiently high transmit power will generate acknowledgements from nodes **230** and **232** outside the conference room.

A number of criteria may be used to determine when the search process is completed The process may be stopped when a particular power level is reached. The process may be stopped when a particular number of nodes have been contacted. The process may be stopped when a node of a particular class has been contacted, for example printer **220**. In many settings, such as group meetings, it may be beneficial to keep within a node the identifications of the nodes of other group members, representing for example the identifications of the personal digital assistants (PDAs) in a group, and continuing the search until all group members have been located. Combinations of these and other criteria are also possible, for example, executing the search process until a certain number of nodes including at least one printer are located, or executing a search until a certain transmit power has been reached. Having the search terminate at a certain power level insures that searches will complete. An example of the utility of this termination criteria would be searching for all members of a group where one member is not present. When no new, additional acknowledgements are received at the specified power level, the search terminates.

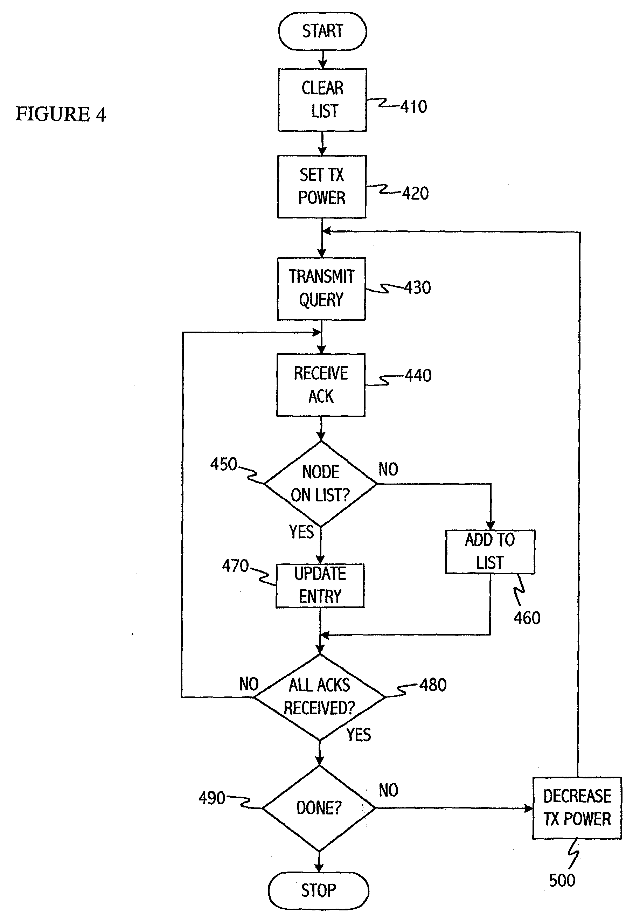

Where the first embodiment of the invention performs the search from low power levels to high, noting when communications with other nodes appear, in another embodiment of the invention shown in Fig. 4, the search begins at a high TX power level and steps down, tracking when nodes are no longer able to maintain communication. The process begins by clearing a list **410** of nodes, then setting **420** the transmit power to a high level. A query is transmitted **430** and an acknowledgement received **440**. If the node sending the acknowledgement is not on the list **450**, a list entry is created **460**. The list entry includes the transmit power used and the reported QoS. If the acknowledging node is already on the list, the entry for that node is updated **470**, indicating that the connection with the node is still viable at a lower TX power level. All acks are processed **480** at the current power level. The process completes when a preset lower power level is reached **490**. If that power level has not been reached, the TX power level is decreased **500** and another query transmitted.

When the process completes at the preset low power level, a list of accessible nodes and the minimum power required to maintain communication has been created.

The QoS information provided by acknowledging nodes may be sufficient so that the querying node may be able to determine how much the transmit power can be reduced and still maintain communications with the node. For example, if a node reports that the signal it received was 23 dB over the quieting level, the transmitter power could be safely lowered by 15 to 20 dB and communications maintained.

These embodiments successfully deal with AWGN and/or co-channel interference, finding the transmit power level required to maintain a particular QoS.

In the embodiments described, it may be beneficial to repeat the process periodically to update information about the nature of the network. Repeating the process, for example, captures information about nodes entering or departing the ad-hoc network.

The foregoing detailed description of the present invention is provided for the purpose of illustration and is not intended to be exhaustive or to limit the invention to the precise embodiments disclosed. Accordingly the scope of the present invention is defined by the appended claims.

## Claims

1. A method of discovering nodes in a wireless peer-to-peer network comprising the steps of:
initialising a list of acknowledged nodes to empty;
selecting a first transmit power level;
broadcasting a query at the selected power level;
listening for acknowledgements from acknowledging nodes;
recording the identification of the acknowledging node;
testing to determine if the search is complete; and,
if the search is not complete, changing the transmit power level and resuming the search process by broadcasting a query at the new selected power level

2. A method according to claim 1, wherein the step of changing the transmit power level comprises incrementing the transmit power level.

3. A method according to claim 1, wherein the step of changing the transmit power level comprises decrementing the transmit power level.

4. A method according to claim 1, 2 or 3, wherein the recording step further comprises for each acknowledgement received, testing to determine if the acknowledging node is already on the list, and if it is not, adding the acknowledging node to the list and recording the identification of the acknowledging node.

5. A method according to any preceding claim, further comprising the step of recording additional information for an acknowledging node, the additional information comprising one or more of:
a quality of service metric reported by the acknowledging node, transmit power level used to contact the acknowledging node, the class of the acknowledging node, or the acknowledgement time.

6. A method according to claim 5, wherein the quality of service metric is based on the received signal strength at the acknowledging node.

7. A method according to claim 6, wherein the quality of service metric is based on the bit error rate at the acknowledging node.

8. A method according to any preceding claim, wherein the test to determine if the search is complete includes testing to determine if a specified transmit power level has been reached.

9. A method according to any preceding claim, wherein the test to determine if the search is complete includes testing to determine if a specified number of nodes have been discovered.

10. A method according to any preceding claim, wherein the test to determine if the search is complete includes testing to determine if a specified class of node has been discovered

11. A method according to any preceding claim, wherein the test to determine if the search is complete includes testing to determine if a specified group of nodes have been discovered

12. A method according to any preceding claim, wherein the wireless network is based on radio frequency energy.

13. The method of any of claims 1 to 11, wherein the wireless network is based on optical energy.

14. A method of discovering nodes in a peer-to-peer wireless network comprising the steps of:
initialising a list of acknowledged nodes to empty;
broadcasting a query at a high power level;
listening for acknowledgements from acknowledging nodes;
recording the identification of an acknowledging node;
recording a quality of service metric from the acknowledging node; and,
calculating the proper transmit power level to use in communicating with the acknowledging node based on the quality of service metric returned by the acknowledging node.
